# EUROPEAN PATENT APPLICATION

(11) **EP 1 870 990 A2**
(43) Date of publication of application: **26.12.2007**
(21) Application number: 07103703.0
(22) Date of filing: 07.03.2007
(51) Int. Cl.: H02K 21/24

(54) **Axial air-gap type motor**

(30) Priority: 20.06.2006 KR 20060055640
(71) Applicant: LG ELECTRONICS INC., Seoul 150-010 (KR)
(72) Inventor: Han, Seung-Do, c/o LG Electr. Inc. (Gasan Campus), Geumcheo-gu (KR); Lee, Dong-Il, 2221-1002, Gyeonggi-Do (KR); Shin, Hyoun-Jeong, 854-7, Incheon (KR)
(74) Representative: Vossius & Partner

(57) **Abstract**

An axial air-gap type motor includes a rotor having a magnet, a stator, having an accommodating space therein, separated from the magnet in an axial direction of the motor by an air gap, and a printed circuit board disposed in the accommodating space of the stator.

## Description

The present invention relates to an axial air-gap type motor, and more particularly, to an axial air-gap type motor having a thin profile.

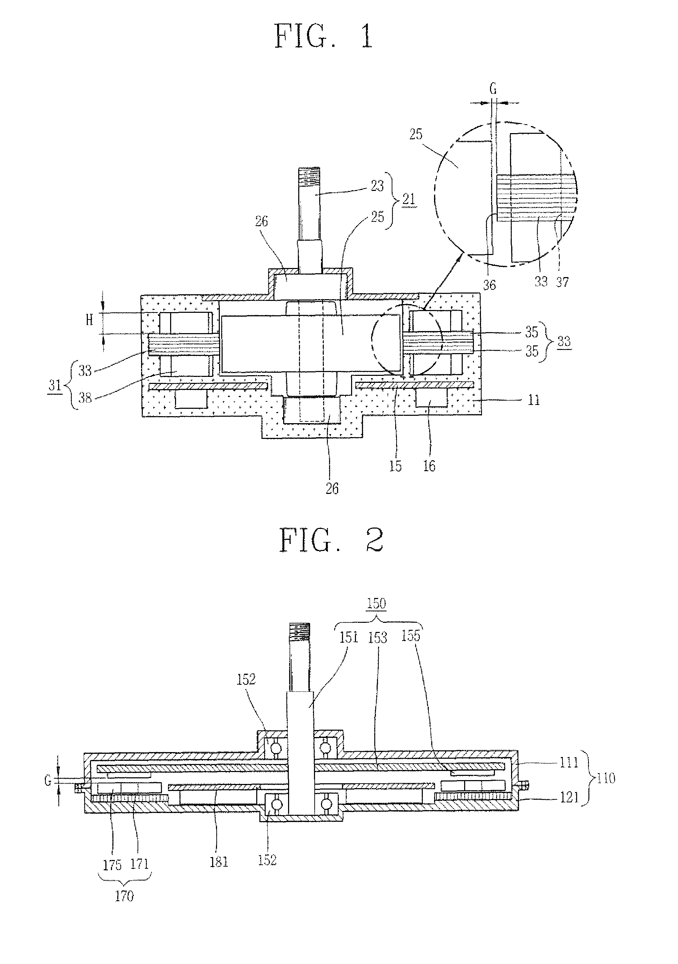

FIG. 1 illustrates a conventional motor which includes a rotor 21 which rotates a rotary shaft 23, and a stator 31 which rotates the rotor 21. The rotor 21 is disposed inside the stator 31, with an air gap G separating the rotor 21 from the stator 31.

The stator 31 includes a stator core 33 which is formed by laminating a plurality of disc-shaped steel sheets 35 together. An accommodating hole 36 is formed in the center of the stator 33, in which the rotor 21 is disposed. When the rotor 21 is disposed in the accommodating hole 36, the rotor 21 is separated from an inner circumference of the stator core 33 by the air gap G.. Teeth and slots 37 are alternately formed along the circumference of the accommodating hole 36. A stator coil 38 winds around the teeth 37, and generates a magnetic force which rotates the rotor 21 when an electric current is applied thereto.

The rotor 21 includes the rotary shaft 23, and a permanent magnet 25 which is coupled to the rotary shaft 23 and rotates the rotary shaft 23. The permanent magnet 25 is disc-shaped, and has a magnetic field which flows in a radial direction of the rotary shaft 23. A bearing 26 is coupled to the rotary shaft 23 to rotatably support the rotary shaft 23.

The stator 31 is housed in a housing 11, which may be made of a synthetic resin, such as a bulk molding compound. A printed circuit board (PCB) 15 is also included in the housing 11. A driving circuit, such as a drive integrated circuit (IC) 16 is provided on the PCB 15.

One of the disadvantages of the conventional motor shown in FIG. 1 is that the existence of the PCB 15 and the drive IC 16 in the housing 11 requires the width of the housing 11 to be increased in the axial direction of the motor.

Further, since the stator coil 38 protrudes above the stator core 33 by a height H, this also increases the width requirements of the housing 11 in the axial direction of the motor.

Further, since the stator core 33 is formed by laminating the plurality of steel sheets 35 in an axial direction, eddy current loss occurs due to axial flux, which decreases the efficiency of the motor.

The present invention relates to an axial air-gap type motor. One of the features of the motor of the present invention is that it is thin and compact. Another feature is that it has low loss from axial flux. Another feature is that it does not require a separate magnet for detecting the position of its rotor. Another feature is that has a low torque ripple.

To achieve at least these features there is provided an axial air-gap type motor which includes a rotor having a magnet, a stator, having an accommodating space therein, separated from the magnet in an axial direction of the motor by an air gap, and a printed circuit board (PCB) disposed in the accommodating space of the stator.

The stator may include a stator core that is laminated in a radial direction of the stator. The stator core may include a plurality of steel rings having different diameters which are laminated together. The stator core may include a plurality of steel pieces having different lengths which are coiled into ring shapes and laminated together. The stator core may include a long piece of steel which is spirally wound and laminated together.

The motor may include a plurality of stator coils disposed on a surface of the stator core. The motor may also include a driving circuit disposed on the PCB which outputs a 3-phase alternating current to the stator coils. The motor may also include a plurality of magnet detectors disposed on a surface of the PCB. The magnet detectors may detect a rotational position of the magnet and correspond to the phases of the 3-phase alternating current.

The magnet may include different magnetic poles that are alternately arranged around a circumference of the magnet. The magnetic poles may have a bottom surface which is substantially flat in its center and is tapered at its edges. A cross-section of the magnetic poles may be shaped as a circular arc. The magnetic poles may be separate members.

The magnet may have a ring shape. The rotor may include a rotor yoke having a disc-shape which supports the magnet. The motor may include a housing accommodating the stator and the rotor therein. The motor may include protrusions formed on one of the housing and the stator, and protrusion receiving portions formed on the other of the housing and the stator so as to receive the protrusions.

There is also provided an axial air-gap type motor which includes a rotor having a magnet, a stator, separated from the magnet in an axial direction of the motor by an air gap, and including a stator core, laminated in a radial direction of the stator and having an accommodating space therein, and stator coils disposed on a surface of the stator core which generate a magnetic force which interacts with the magnet, a PCB, including a driving circuit which outputs a 3-phase alternating current to the stator coils, disposed in the accommodating space of the stator, and a plurality of magnet detectors which detect a rotational position of the magnet.

The stator core may include protrusions to which the stator coils are coupled, the stator coils being arranged in a circle. The motor may include an insulating member disposed between the stator core and the stator coils.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a cross-sectional view illustrating one example of a motor according to the related art;
FIG. 2 is a cross-sectional view of an axial air-gap motor according to a first embodiment of the present invention;
FIG. 3 is an exploded perspective view of an axial air-gap motor of FIG. 2;
FIG. 4 is a plan view of a coupled state of FIG. 3;
FIG. 5 is a view illustrating a method of manufacturing a stator core of FIG. 2;
FIG. 6 is a view illustrating another method of manufacturing a stator core of FIG. 2;
FIG. 7 is a view illustrating still another method of manufacturing a stator core of FIG. 2;
FIG. 8 is a view illustrating a wire connection of stator coils of FIG. 2;
FIG. 9 is a view illustrating a modification of magnet detectors of FIG. 2;
FIG. 10 is a bottom view of a rotor of FIG. 2;
FIG. 11 is a perspective view of a magnet of FIG. 2;
FIG. 12 is a cross-sectional view of a part of FIG. 11;
FIGS. 13 to 18 are views illustrating each modification of a magnet of FIG. 2;
FIG. 19 is a cross-sectional view of an axial air-gap motor according to a second embodiment of the present invention;
FIG. 20 is an exploded perspective view of a stator core and stator coils of an axial air-gap motor of FIG. 19;
FIG. 21 is a side view of an electronic steel plate for forming protrusions of FIG. 20; and
FIG. 22 is a view of the coupling between the stator core and stator coils of the motor of FIG. 19.

### DETAILED DESCRIPTION OF THE INVENTION

FIG. 2 shows a cross-sectional view an embodiment of an axial air-gap type motor according to the present invention. The motor shown in FIG. 2 includes a rotor 150 and a stator 170. The rotor 150 includes a rotary shaft 151, and a magnet 155 having a magnetic field that flows in an axial direction of the motor. The stator 170 is separated from the magnet 155 by an air gap G. The motor also includes a PCB 181, which is disposed in an accommodating space of the stator 170.

The rotor 150 and stator 170 are housed in a housing 110. In one embodiment of the motor, the housing 110 may include a first body 111 and a second body 121 which detachably couple together along the axial direction of the motor.

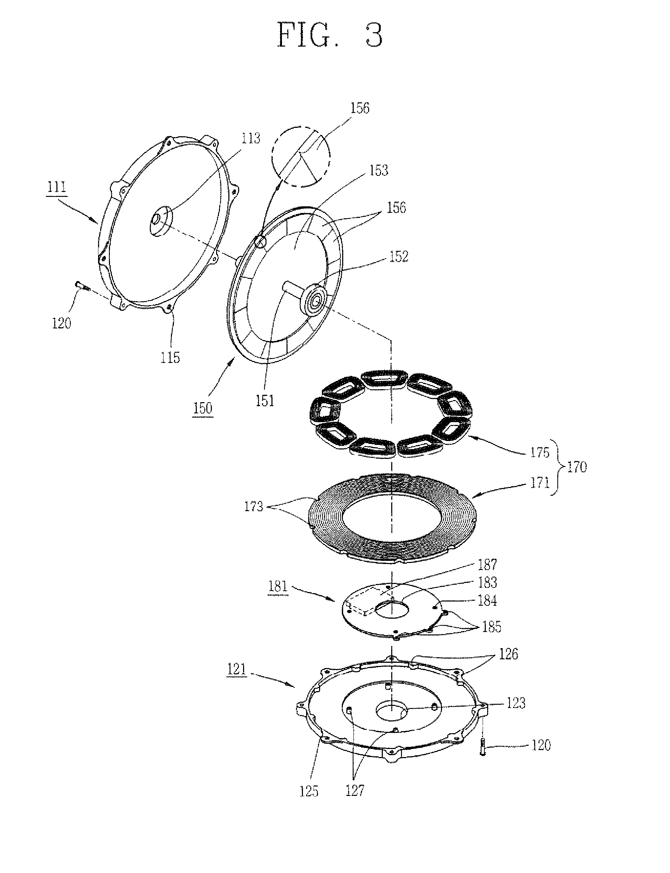

FIG. 3 shows an exploded perspective view of an embodiment of the motor shown in FIG. 2. As shown in FIG. 3, bearing engaging portions 113 and 123 may be formed in the first body 111 and second body 121, respectively. Bearing engaging portions 113 and 123 accommodate bearings 152, which rotatably support the rotary shaft 151. To couple the first body 111 and second body 121 together, screw mounting portions 115 and 125 may be formed on the first body 111 and second body 121, respectively. The screw mounting portions 115 and 125 may protrude from the outer circumference of the of the first body 111 and second body 121, respectively, as shown in FIG. 3. Screws 120 are screwed in the screw mounting portions 115 and 125 to couple the first body 111 and second body 121 together.

Protrusions 126 may be formed along the outer circumference of the second body 121, protruding towards the center of the second body 121 as shown in FIG. 3. The protrusions 126 hold a stator core 171 of the stator 170 in place. A plurality of boss portions 127 may also be formed inside the second body 121 to hold the PCB 181 in place.

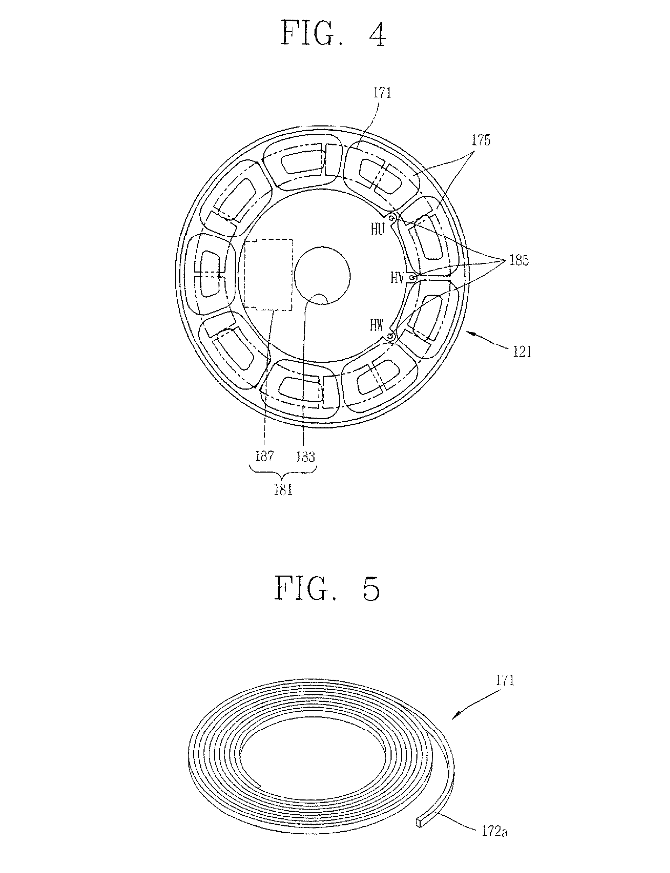

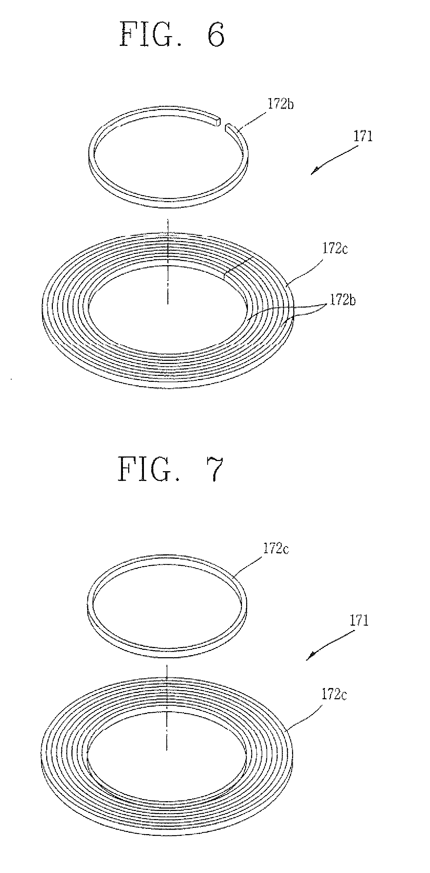

The stator 170 includes a plurality of stator coils 175, and the stator core 171, which has a thin, flat shape. FIGS. 5-7 illustrate various embodiments of the stator core 171. In the embodiment shown in FIG. 5, the stator core 171 is made of a single long piece of steel 172a, or other suitable material, which is spirally wound and laminated together. In the embodiment shown in FIG. 6, the stator core 171 is made of a plurality of pieces of steel 172b, or other suitable material, which have different lengths. The pieces 172b are coiled into ring shapes and are placed inside a ring of steel 172c, or other suitable material. The pieces 172b and the ring 172c are laminated together. In the embodiment shown in FIG. 7, the stator core 172 is made of a plurality of rings 172c, made of steel or other suitable material, which have different diameters. The plurality of rings 172c are laminated together. As shown in FIG. 3, protrusion receiving portions 173 may be formed on the outer circumference of the stator core 171. The protrusions 126 formed on the second body 121 fit within the protrusion receiving portions 173 to hold the stator core 171 in place when it is fitted on the second body 121. As an alternative, protrusion receiving portions may be formed on the second body 121, and protrusions may be formed on the outer circumference of the stator core 171, to fit within the protrusion receiving portions to hold the stator 171 in place.

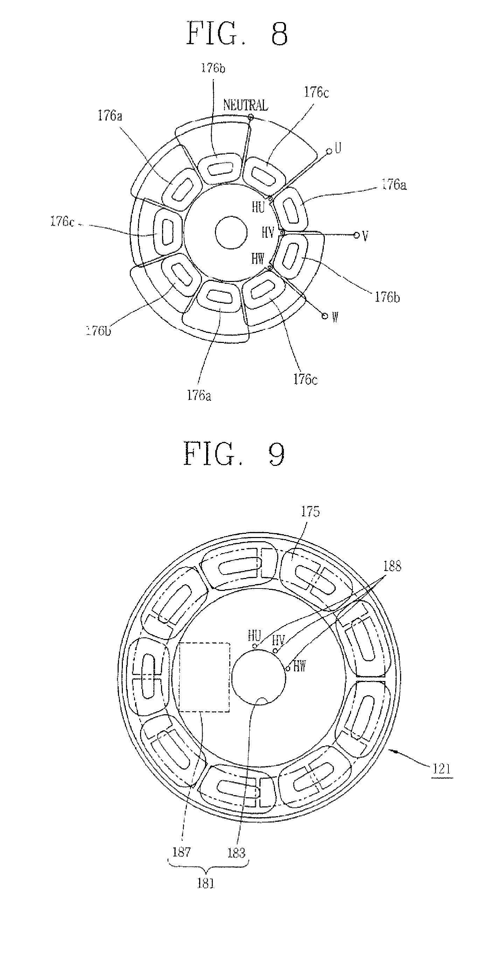

FIG. 8 illustrates the connections of the stator coils 175. As shown in FIG 8, the stator coils 175 include coils 176a, coils 176b, and coils 176c, to which a u-phase alternating current, a v-phase alternating current, and a w-phase alternating current, are connected, respectively. Each of the coils 176a, 176b and 176c is wound several times to form a loop shape. Since the coils 176a, 176b and 176c are not wound around cores, no eddy current loss occurs, and the weight of the motor can be reduced.

The stator 170 includes an equal number of coils 176a, 176b and 176c (three, in the example shown in FIG. 8). As shown in FIG. 8, the coils 176a, 176b and 176c are arranged in a circle, and with an alternating pattern. Each of the coils 176a are electrically connected together, and connected to a u-phase alternating current; each of the coils 176b are electrically connected together, and connect to a v-phase alternating current; and each of the coils 176c are electrically connected together, and connect to a w-phase alternating current.

The PCB 181 fits within the inner circumference of the stator core 171. The PCB 181 may be in the shape of a disc, as shown in FIG. 3, or in any other shape which allows it to fit within the inner circumference of the stator core 171. In the embodiment of the PCB 181 shown in FIG. 3, a shaft hole 183 is formed in the center of the PCB 181, through which the rotary shaft 151 passes. A plurality of screw holes 184 may be formed on the PCB 181 to screw the PCB 181 to the second body 121. A driving circuit 187 is disposed on a surface of the PCB 181. The driving circuit 187 may be implemented, for example, as an IC. The driving circuit 187 outputs the 3-phase alternating current (i.e., the u-phase, v-phase and w-phase alternating currents) to the stator coils 175.

FIG. 4 shows a perspective view of an embodiment of the stator 170 and the PCB 181. In the embodiment shown in FIG. 4, magnet detectors 185 are provided on the PCB 181, at three positions along the periphery of the PCB 181. The magnet detectors 185 detect a rotational position of the magnet 155, and may be implemented, for example, by hall sensors. The magnet detectors 185 correspond to the u-phase, the v-phase and the w-phase of the stator coils 175.

FIG. 9 shows a perspective view of another embodiment of the stator 170 and the PCB 181. In this embodiment, magnet detectors 188 are provided on the PCB 181 at positions along the periphery of the shaft hole 183, rather than along the periphery of the PCB 181, as with the embodiment of FIG. 4.

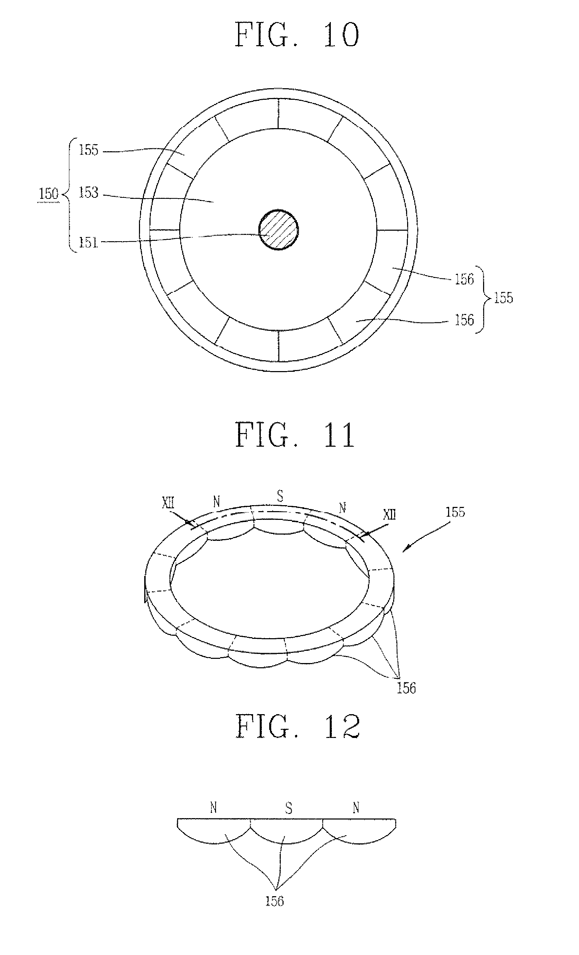

FIG. 10 shows a bottom view of the rotor 150. The rotor 150 includes a rotor yoke 153 which is coupled to the rotary shaft 151, and supports the magnet 155. The rotor yoke 153 may be formed as a disc-shaped magnetic member. The magnet 155 has a ring shape, and may be integrally formed, for example, by injection molding, to simplify the formation process. The magnet 155 includes a plurality of magnetic poles 156. N poles and S poles of the magnetic poles 156 are alternately arranged in the magnet 155.

FIGS 11 and 12 show an embodiment of the magnet 155. In the embodiment shown in FIGS. 11 and 12, the cross section of the magnetic poles 156 is shaped as a circular arc.

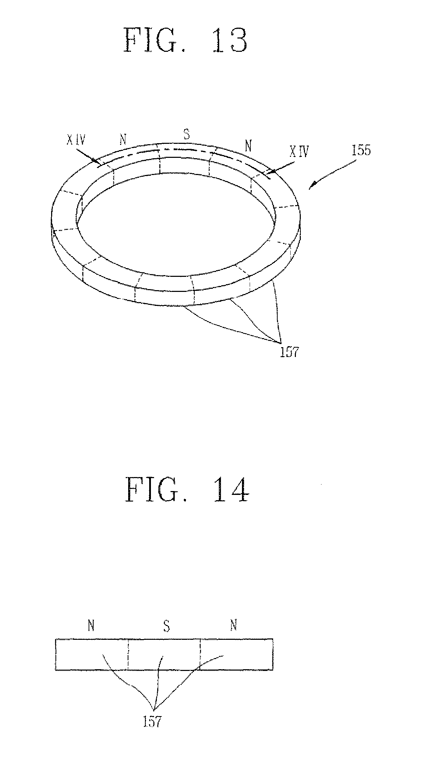

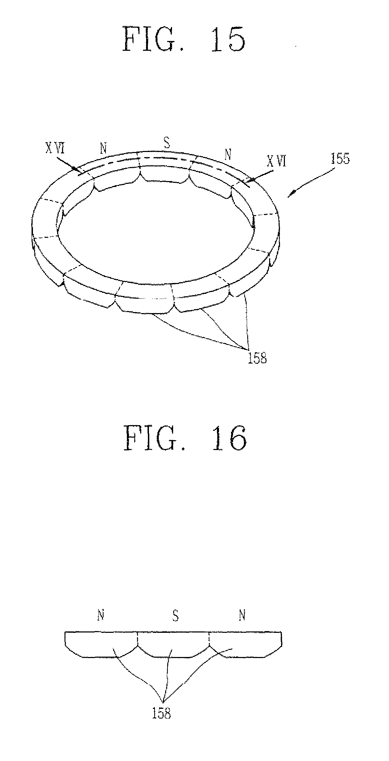

FIGS 13 and 14 show another embodiment of the magnet 155. In this embodiment, the magnet 155 is made up of magnetic poles 157 which have a substantially uniform thickness. FIGS. 15 and 16 show another embodiment of the magnet 155. In this embodiment, the magnet 155 is made up of magnetic poles 158 which have a bottom surface which is substantially flat in its center and is tapered at its edges.

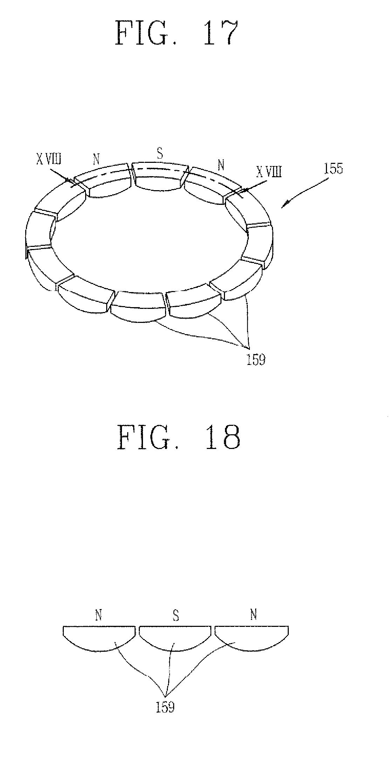

FIGS. 17 and 18 show yet another embodiment of the magnet 155. In this embodiment the magnet 155 is made up of magnetic poles 159 which are separate members, rather than being integrally formed, as described above. The cross-section of the magnetic poles 159 shown in FIGS. 17 and 18 is shaped as a circular arc. However, in other embodiments, the magnetic poles 159 may have a substantially uniform thickness, as shown in FIGS. 13 and 14, or may have a bottom surface which is substantially flat in its center and is tapered at its edges, as shown in FIGS. 15 and 16.

The motor described above is assembled by positioning the stator core 171 and stator coils 175 on the second body 121, positioning the PCB 181 within the inner circumference of the stator core 171, positioning the rotor 150 such that the rotary shaft 151 passes through the inner circumference of the stator core 171 and the shaft hole 183 of the PCB 181 and a lower bearing 152 fits in the bearing engaging portion 123, positioning the first body 111 over the rotor 150 such that an upper bearing 152 fits in the bearing engaging portion 113, and fixing the first body 111 and second body 121 together, such as by screwing the bodies 111 and 121 together with screws 120, as shown in FIGS. 2 and 3.

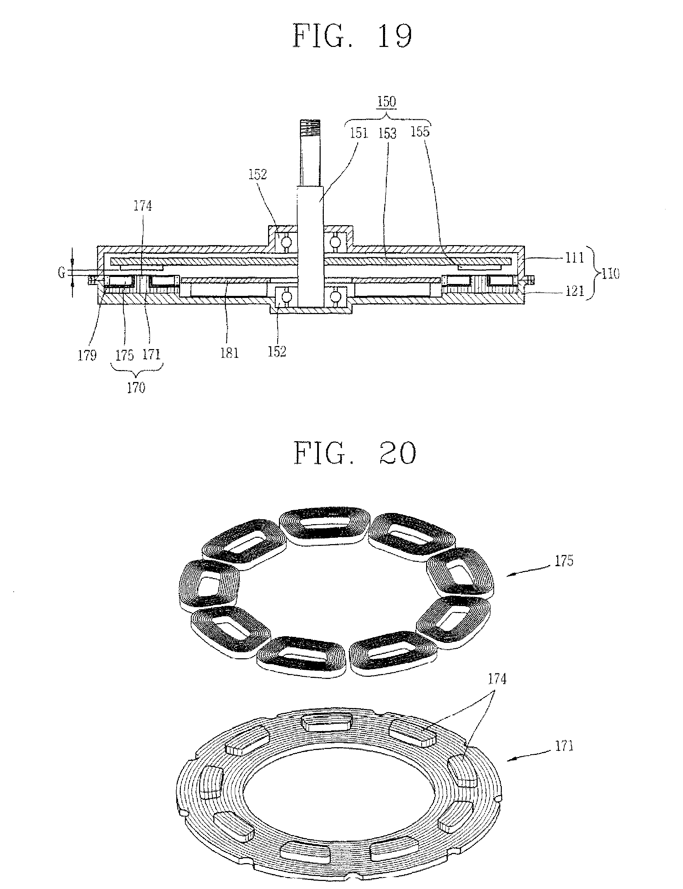

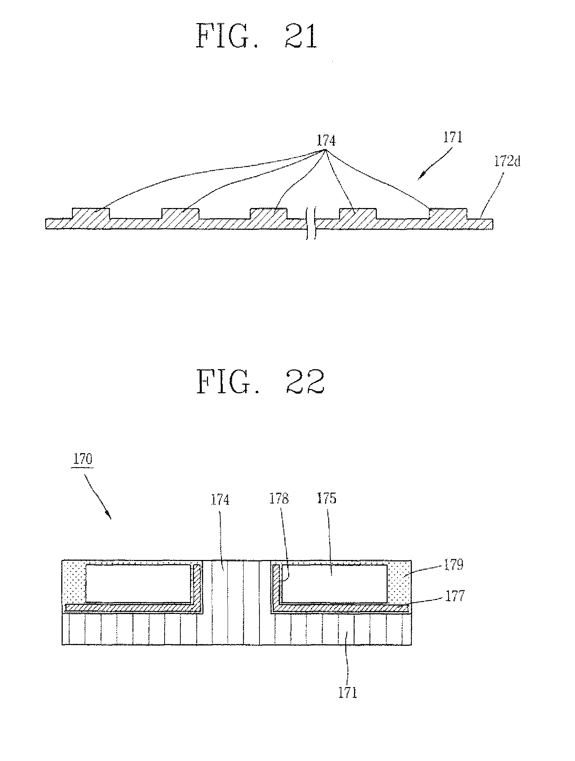

FIGS. 19-22 illustrate another embodiment of an axial air-gap type motor according to the present invention. This embodiment differs from the motor described above in that a plurality of protrusions 174 are formed on a top surface of the stator core 171, to which the stator coils 175 couple. To form the stator core 171 shown in FIGS. 19 and 20, one or more pieces of steel 172d may be formed with the protrusions 174, as shown in FIG. 21. The pieces of steel 172 may form the stator core 171 by one of the methods discussed above in relation to FIGS. 5 to 7.

As shown in FIG. 22, an insulating member 177 is disposed between the stator core 171 and the stator coils 175 for insulation. A supporting portion 178 which supports each of the stator coils 175 is formed on the insulating member 177. A molding portion 179 is formed outside the stator core 171, the insulating member 177, and the stator coils 175 so as to cover them.

In the axial air-gap type motor described above, the stator and rotor are separated in the axial direction by an air gap, and the PCB is disposed inside the stator, allowing the motor to have a thin, compact size.

Another advantage of the motor is that, when the stator core is laminated in a radial direction, eddy current losses due to axial flux are reduced. Further, the manufacturing process can be simplified if the magnet is formed by injection molding.

Another advantage is that the arrangement of the magnetic poles in the magnet reduces torque ripple and noise.

Another advantage is that the magnet detectors are provided without increasing the size of the motor.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. An axial air-gap type motor, comprising:
a rotor including a magnet;
a stator, having an accommodating space therein, separated from the magnet in an axial direction of the motor by an air gap; and
a printed circuit board (PCB) disposed in the accommodating space of the stator.

2. The motor of claim 1, wherein the stator comprises a stator core that is laminated in a radial direction of the stator.

3. The motor of claim 2, wherein the stator core comprises a plurality of steel rings having different diameters which are laminated together.

4. The motor of claim 2, wherein the stator core comprises a plurality of steel pieces having different lengths which are coiled into ring shapes and laminated together.

5. The motor of claim 2, wherein the stator core comprises a long piece of steel which is spirally wound and laminated together.

6. The motor of any of claims 2 to 5, further comprising a plurality of stator coils disposed on a surface of the stator core.

7. The motor of claim 6, further comprising a driving circuit disposed on the PCB which outputs a 3-phase alternating current to the stator coils.

8. The motor of claim 7, further comprising a plurality of magnet detectors disposed on a surface of the PCB.

9. The motor of claim 8, wherein the plurality of magnet detectors detect a rotational position of the magnet and correspond to the phases of the 3-phase alternating current.

10. The motor of any of claims 1 to 9, wherein the magnet comprises different magnetic poles that are alternately arranged around a circumference of the magnet.

11. The motor of claim 10, wherein the different magnetic poles have a bottom surface which is substantially flat in its center and is tapered at its edges.

12. The motor of claim 10 or 11, wherein a cross-section of the different magnetic poles is shaped as a circular arc.

13. The motor of any of claims 10 to 12, wherein the different magnetic poles are separate members.

14. The motor of any of claims 1 to 9, wherein the magnet has a ring shape.

15. The motor of any of claims 1 to 14, wherein the rotor comprises a rotor yoke having a disc-shape which supports the magnet.

16. The motor of any of claims 1 to 15, further comprising a housing accommodating the stator and the rotor therein.

17. The motor of claim 16, further comprising:
protrusions formed on one of the housing and the stator; and
protrusion receiving portions formed on the other of the housing and the stator so as to receive the protrusions.

18. An axial air-gap type motor, comprising:
a rotor including a magnet;
a stator, separated from the magnet in an axial direction of the motor by an air gap, and having a stator core, laminated in a radial direction of the stator and having an accommodating space therein, and stator coils disposed on a surface of the stator core which generate a magnetic force which interacts with the magnet;
a printed circuit board (PCB), including a driving circuit which outputs a 3-phase alternating current to the stator coils, disposed in the accommodating space of the stator; and
a plurality of magnet detectors which detect a rotational position of the magnet.

19. The motor of claim 18, wherein the stator core comprises protrusions to which the stator coils are coupled, the stator coils being arranged in a circle.

20. The motor of claim 18 or 19, further comprising an insulating member disposed between the stator core and the stator coils.
